# EUROPÄISCHE PATENTSCHRIFT

(11) **EP 1 718 895 B1**
(45) Veröffentlichungstag und Bekanntmachung des Hinweises auf die Patenterteilung: **30.03.2011**
(21) Anmeldenummer: 05700373.3
(22) Anmeldetag: 18.02.2005
(51) Int. Cl.: F16L 59/02

(54) **ISOLIERUNG UND VERFAHREN ZUM HERSTELLEN EINES ISOLIERELEMENTES**
INSULATION, AND METHOD FOR THE PRODUCTION OF AN INSULATING ELEMENT
ISOLATION ET PROCEDE POUR FABRIQUER UN ELEMENT ISOLANT

(30) Priorität: 27.02.2004 CH 328042004
(43) Veröffentlichungstag der Anmeldung: 08.11.2006
(73) Patentinhaber: Etis AG, 9100 Herisau (CH)
(72) Erfinder: WIRTH, Anton, CH-9056 Gais (CH)
(74) Vertreter: Büchel, von Révy & Partner
(86) Internationale Anmeldenummer: PCT/CH2005/000095
(87) Internationale Veröffentlichungsnummer: WO 2005/083315

(56) Entgegenhaltungen:
- EP-A- 0 403 943
- EP-A- 1 097 338
- DE-A1- 2 812 680
- US-A- 2 180 373
- US-A- 4 676 946

## Beschreibung

Die Erfindung bezieht sich auf eine Isolierung nach dem Oberbegriff des Anspruches 1 und auf Verfahren zum Herstellen von Isolierelementen nach dem Oberbegriff des Anspruches 10. Isolierungen mit solchen Isolierelementen werden zum thermischen Isolieren von Verbrennungsmotoren, insbesondere deren Auspuffleitungen, Turboladern, Katalysatoren und Schalldämpfern, sowie Gas- und Dampfturbinen benötigt. Sie können aber allgemein bei Rohren, Rohrkrümmern, Leitungskompensatoren oder Behältern mit an der Oberfläche erhöhten Temperaturen und insbesondere mechanischen Schwingungen eingesetzt werden.

Die Isolierung von Auspuffrohren bzw. Abgasleitungen hat die Aufgabe, die Entzündungsgefahr für Brennstoffe an heissen Oberflächen zu beseitigen, die Wärmeabgabe durch Abstrahlung und Konvektion von den heissen Teilen sowie gegebenenfalls auch die Schallübertragung zu reduzieren und insbesondere einen Berührungsschutz zu gewährleisten. Wenn aufgrund der Isolierung eine gleichmässige Temperaturverteilung auf dem Auspuff, dem Katalysator oder dem Turbolader erzielt wird, so können zudem Wärmespannungen, bzw. Spannungsrisse in den Gusskörpern, verhindert werden. Kleinere Wärmeverluste reduzieren die Erwärmung in der Umgebung der isolierten Teile.

Bei grossen Schiffsmotoren oder bei stationären Motoren werden zur Auspuff- und Turboladerisolierung so genannte Kassettenisolierung eingesetzt, die Isolierkissen umfassen, deren Hüllen aus Glasfaserstoff bestehen und die mit Isoliermatten gefüllt sind. In der WO 97/48943 wird eine verbesserte thermische und akustische Isolierung für Maschinenkomponenten mit starken mechanischen Schwingungen beschrieben. Sie besteht aus halbschalenförmigen lsolierelementen, die räumlich so ausgebildet sind, dass sie exakt den Konturen des zu isolierenden Körpers folgen. Die Isolierelemente umfassen Hüllen und darin aufgenommenes Isoliermaterial. Die Aussenhaut der Isolierelemente, bzw. der nach aussen gerichtete Hüllenbereich, ist aus einem mit Silikon beschichteten Glasfaserstoff gefertigt. Die Innenhaut der Isolierelemente, bzw. der gegen den zu isolierenden Körper gerichtete Hüllenbereich, besteht aus einem Glasfasergewebe, das mit V4A-Draht durchwoben ist, so dass der Stoff bessere mechanische Eigenschaften bei hohen Temperaturen hat. Die stirnseitigen Enden werden durch Silikatfaserplatten verstärkt, um der Isolierung die notwendige Steifigkeit zu verleihen, um eine leichte Montage zu ermöglichen und um Axialkräfte aufnehmen zu können. Die Isolierelemente umfassen zwischen der Hülle und dem zu isolierenden Körper ein Chromstahlblech oder ein Chromstahlnetz als Reibungsschicht, welche die Reibung zwischen der Isolierung und dem Bauteil zu einem grossen Anteil aufnimmt. Als Isoliermaterial wird langfaserige Silikatfaserwolle verwendet. Die Isolierelemente bei den Trennfugen durch Lappen aus Glasfaserstoff, die mit einem Klettenverschluss versehen sind, zusammengehalten. Langzeittests haben nun aber gezeigt, dass sich Klettverschlüsse zumindest bei einzelnen Anwendungen nicht bewähren.

Um die Hüllenschichten und die Reibungsschicht in konstantem bzw. verschwindendem Abstand zur jeweiligen Aussenkontur der Bauteile verlaufend auszubilden, werden diese aus Zuschnitteilen von flächigen Materialbahnen hergestellt. Es handelt sich also grundsätzlich um zweidimensionale Teile, die erst durch das Zusammennähen, im Falle des Drahtgitters durch Rollenschweissen, oder im Falle des Isoliermateriales durch das gestossene Einfüllen in die Hülle, zu einer Schicht mit dreidimensionaler bzw. gekrümmter Form führen. Die flächigen Teile müssen als Zuschnitte so gewählt werden, dass die daraus zusammengestellten Schichten eine im Wesentlichen exakt an das Bauteil angepasste Form erhalten. Das Zuschneiden und das anschliessende Vernähen der Zuschnitte bzw. Abwicklungen ist bei der Herstellung kleiner Isolierelemente zu aufwendig.

Die Aussenhaut bzw. der nach aussen gerichtete Hüllenbereich der Isolierelemente, welcher aus einem mit Silikon beschichteten Glasfaserstoff gefertigt ist, kann anfänglich das Eindringen von Flüssigkeiten von aussen in die Isolierung verhindern. Es hat sich nun aber gezeigt, dass die Silikonbeschichtung bei längeren Einsatzzeiten in Motorenräumen gelegentlich beschädigt wird. Nach längeren Einsatzzeiten kann die Silikonbeschichtung daher den benötigten Spritzschutz nicht mit Sicherheit gewährleisten. Es besteht nun die Gefahr, dass Ölspritzer in die Isolierung eindringen und bis zur heissen Oberfläche des isolierten Bauteiles gelangen, wo sie entzündet werden können. Die damit verbundene Brandgefahr sollte vollständig ausgeschlossen werden.

Aus der US 4 442 585 ist eine Isolierung bekannt, deren Isoliermatten Isoliermaterial aus Keramikfasern in einer Hülle aus mit Silikon beschichtetem Fiberglasgewebe umfassen. Um die Isolierung zusammenzuhalten, wird ein äusserst flexibler, gestrickter Strumpf aus Draht darüber gezogen. Der Strumpf hat für sich keine Formstabilität und so grosse Maschen, dass ein Hautkontakt zur Hülle möglich ist. Weil die Silikonbeschichtung nur bis zu Temperaturen von 180-200°C beständig ist, kann eine Isolierung gemäss der US 4 442 585 lediglich für Bauteile eingesetzt werden, deren Temperatur auch im isolierten Zustand unterhalb von 200°C liegt. Dies schränkt die Einsatzmöglichkeit der Isolierung unerwünscht stark ein. Zudem wird das beschichtete Fiberglasgewebe beim Isolieren von Komponenten mit hohen Temperaturen aufgrund der möglichen schnellen Verdampfung von Kondenswasser undicht.

In der US 5 617 900 ist eine Isolierung beschrieben, die zwischen einem inneren und einem äusseren aus Metalldraht gestrickten Strumpf ohne Formstabilität eine zylindrisch geschlossen angeordnete Metallfolie umfasst. Diese Isolierung soll um Leitungen angeordnet werden, die durch Raumbereiche mit erhöhter Temperatur führen. Die Wärmeschutzwirkung soll durch die reflektierende Metallfolie erzielt werden. Der äussere Metalldraht-Strumpf hält die Folie an der Leitung und ist grossmaschig ausgebildet, so dass die Reflektionswirkung der Folie möglichst unbeeinträchtigt zur Geltung kommt. Diese Isolierung ist nicht geeignet, um Leitungen mit sehr hohen Innentemperaturen genügend gut nach aussen zu isolieren, bzw. um grosse Temperaturgradienten zu gewährleisten. Die Wärmeleitungsfähigkeit senkrecht durch die Isolierung ist viel zu hoch. Zudem kann sich zwischen der Leitung und der Metallfolie Kondenswasser bilden, das beim Verdampfen zu Problemen führt.

Die US 5 816 043 beschreibt eine Isolierung eines Kollektor-Rohrteils für Motoren die auf sehr hohen Temperaturen betrieben werden. Die Isolierung soll einen Hitzeschild oder eine Wärmebarriere zwischen dem heissen Rohrteil und einem Hitze empfindlichen Betriebsteil bilden. Die Isolierung besteht aus halbschalenförmigen Isolierelementen, die das Rohrteil umschliessen und mittels Spangen daran festgesetzt sind. Die Isolierelemente bestehen aus einer Hülle aus Metallfolie und darin angeordnetem Fasermatten-Isoliermaterial. Weil die Temperatur des isolierten Rohrteils zwischen der Umgebungstemperatur und sehr hohen Temperaturen schwankt, kann sich zwischen dem Rohrteil und der daran anliegenden Metallfolie Kondenswasser bilden, das beim Verdampfen zu Problemen führt.

Aus der EP 1 097 338 B1 ist ein Isoliersystem für Motorfahrzeuge bekannt, bei dem die Abgasleitungen im wesentlichen direkt von deren Anschlussbereich am Motor mit einer die Leitungen vollständig umschliessenden Isolierung isoliert werden, um die Wärmeenergie der Heissgase möglichst verlustfrei durch den überwiegenden Teil des Abgasleitungssystems zu führen. Mit Isoliermaterial gefüllte Hüllen aus mit Draht hergestelltem Flachmaterial, bzw. textilem Material aus Draht, die an die jeweilige Form der Aussenfläche des Bauteils angepasst sind, bzw. mit einer Kontaktfläche im wesentlichen dicht an der Aussenfläche des Bauteiles anliegen, haben sehr gute Isolationseigenschaften. Zur Herstellung der textilen Hüllen werden widerstandsfähige Drähte, insbesondere Edelstahldrähte, bzw. Drähte aus rostfreiem Stahl, verwendet. Die Wahl eines Drahtes hängt dabei sowohl von der zu erwartenden Temperatur- und Reibungs-, Feuchtigkeitsund gegebenenfalls Säurebelastung als auch von der Art der Verarbeitung zum textilen Material ab.

Durch die Hülle aus mit Draht hergestelltem Flachmaterial ist ein Feuchtigkeitsaustausch gewährleistet, der verhindert, dass sich Kondenswasser zwischen dem Bauteil und der Innenhaut der Hülle überhitzen und plötzlich verdampfen kann. Indem das Fasermaterial direkt an das aus Draht hergestellte Flachmaterial angrenzt, können weitere Schichtgrenzen, die beispielsweise dampfundurchlässig, nicht temperaturbeständig oder beschädigungsanfällig sind, vermieden werden. Die Innenhaut und/oder die Aussenhaut ist bzw. können als Mikrofilter-Metallgewebe ausgebildet werden. Mikrofilter-Metallgewebe haben sehr hohe Maschenzahlen und werden aus Drähten mit kleinem Querschnitt gebildet. Solche Filter-Drahtgewebe können Filterfeinheiten von wenigen Mikrons beispielsweise von 20µ aufweisen, und_haben_entsprechend_kleine Luftdurchtrittsquerschnitte, was gewährleistet, dass im wesentlichen keine Fasern des Isoliermaterials aus der Hülle austreten können.

Ein beschriebenes Mikrofilter-Metallgewebe mit der Filterfeinheit von 20µ hat einen Kettdraht-Durchmesser von 0.042mm, einen Schussdraht-Durchmesser von 0.125mm und eine Maschenzahl von 600x125 Maschen/cm². Die Drähte des besonders geeigneten Mikrofilter-Flachmaterials haben Durchmesser im Bereich von 0.02mm bis 0.4, insbesondere von 0.04mm bis 0.13mm und die Maschenzahl in einer Richtung liegt im Bereich von 80 bis 1000 Maschen/cm. Der Werkstoff des Drahts wird mit WN1.4539 bezeichnet und ist ein hochsäurebeständiger Sonder-Stahl mit besonders guter Beständigkeit gegen Schwefel- und Phosphorsäure. Im Weiteren hat der Werkstoff eine gute Beständigkeit gegen konzentrierte organische Säuren, auch bei höheren Temperaturen, sowie gegen Salz- und Sodalösungen. Der Stahl ist besonders unempfindlich gegen Lochfrass und Spannungskorrosion. Zufolge seines auf maximal 3% abgesenkten Kohlenstoffgehaltes ist er vollkommen kornzerfallbeständig und ohne thermische Nachbehandlung schweissbar. Der Werkstoff kann bis zu Temperaturen von 1000°C, bzw. im Dauerbetrieb über 450-800°C, eingesetzt werden.

Isolierungen gemäss der EP 1 097 338 B1 haben den Nahteil, dass Öl durch die Aussenhaut das Isoliermaterial und die Innenhaut bis zum heissen Bauteil vordringen und sich dort entzünden kann. Daher sind diese Isolierungen nur im Fahrzeugbereich geeignet. Bei in Räumen angeordneten Motoren und Turbinen darf aus Brandschutz-Gründen kein Öl zu den heissen Bauteilen gelangen.

Die US 2 180 373 beschreibt ein Isolierelement mit einem metallischen Korb, einer metallischen Deckschicht und dazwischen eingesetztem Isoliermaterial, wobei die Verbindung zwischen dem Korb und der Deckschicht über Distanz haltende Elemente ausgebildet ist, was mit einem Spalt zwischen Korb und Deckschicht verbunden ist. Zum Verbinden von aneinander anschliessenden Isolierelementen sind Clips an der metallischen Deckschicht fest geschweisst, welche über Schrauben miteinander verbunden werden. Die Deckschicht muss somit eine hohe Stabilität haben, um die Verbindungskräfte aufzunehmen. Diese starren Isolierelemente sind nicht geeignet für den Einsatz an verschiedenartig geformten Bauteilen.

Die US 4 676 946 beschreibt eine Isolationsmatte für Teile eines Atomreaktors mit Isoliermaterial, einer wasserdichten Schicht und einer Hülle aus einem Drahtgeflecht. Das Drahtgeflecht wird dafür benötigt, dass bei einer durch einen Wasserstrom erzielten Zerstörung der Isolationsmatte, das Isoliermaterial durch das Drahtgeflecht austritt und dabei zerkleinert wird, damit die Zirkulationsanordnung der Kühlflüssigkeit nicht von grossen Teilen verstopft wird. Weil die Dichtheit der wasserdichte Schicht mittels Silikongummi erzielt wird, ist sie nicht geeignet für den Schutz gegen heisses Öl.

Die DE 28 12 680 beschreibt Isolierelemente mit einem Isolierkern und einer Hülle, die aus Glasfasergewebe und Drahtgewebe zusammengestellt ist. Weil heisses Öl durch die Isolierelemente durchtreten kann, ist deren Einsatz eingeschränkt.

Es zeigt sich nun, dass keine Isolierung bekannt ist, die insbesondere bei hohen Temperaturen eine genügende Wärmedämmung gewährleistet, bei der Bildung von Kondenswasser ein plötzliches Verdampfen und die damit verbundenen Schäden vermeidet und zudem einen langfristigen Schutz vor dem Eintritt von Öl durch die Aussenhaut gewährleistet.

Der vorliegenden Erfindung liegt daher die Aufgabe zugrunde, eine Isolierung zu schaffen, die gute thermische Isolationseigenschaften hat, auch in feuchter Umgebung betriebssicher bzw. im wesentlichen wartungsfrei ist, sowie langfristig einen Zugang von Öl zum Bauteil verhindert. Die Isolierung soll an verschiedenartig geformten Bauteilen mit kleinem Aufwand montierbar sein.

Diese Aufgabe wird durch die Merkmale des Anspruches 1 und durch die Merkmale des Anspruches 10 bzw. 11 gelöst. Die abhängigen Ansprüche beschreiben bevorzugte bzw. alternative Ausführungsformen.

Die Isolierung mit erfindungsgemässen Isolierelementen erstreckt sich entlang von Bauteilen mit gekrümmten und gegebenenfalls um mindestens eine Bauteilachse geschlossenen Aussenflächen. In Achs- und gegebenenfalls auch in Umfangsrichtung kann sie aus aneinander anschliessenden Abschnitten bzw. Elementen zusammengestellt werden. Jedes Isolierelement umfasst mindestens eine Hülle und in der Hülle angeordnetes Isoliermaterial. Die gegen das Bauteil gerichtete Teilfläche des Isolierelementes bildet die Innenhaut und die gegen aussen gerichtete Teilfläche des Isolierelementes die Aussenhaut. Die Innenhaut kann im montierten Zustand zumindest bereichsweise an die Aussenfläche des Bauteils anliegen.

Beim Lösen der Aufgabe wurde erkannt, dass die Aussenhaut des Isolierelementes eine Folie aus Edelstahl, insbesondere Chromstahl oder aus einem anderen robusten bzw. betriebsbeständigen dünnen Flachmaterial umfassen muss, so dass mit dieser betriebsbeständigen Schottschicht ein sicherer Schutz vor dem Eintritt von entzündbaren Flüssigkeiten gegeben ist. Unter betriebsbeständiger Schottschicht sollen somit nebst den bevorzugten Metallfolien im allgemeinsten Sinne auch Folien aus Stoffen umfasst sein, welche bezüglich Hitze und mechanischer Belastung im Wesentlichen gleich beständig sind, wie Metall-, insbesondere Edelstahlfolien. Bevorzugt sind Folien ohne Beschichtung. Es versteht sich aber von selbst, dass gegebenenfalls auch hitzebeständige Gewebe mit einer hitzebeständigen Beschichtung, beispielsweise mit einem hohen anorganischen Anteil, eingesetzt werden können. Zum Aufbringen von abdichtenden metallischen oder keramischen Partikeln könnten etwa Spritz- oder Sprühverfahren eingesetzt werden, bei denen die Partikel dauerhaft am Gewebe festgesetzt werden.

Eine betriebsbeständige Schottschicht (insbesondere eine Metallfolie), die verformbar ist, hat den Vorteil, dass sie mit kleinem Aufwand in gewünschte Formen umgeformt werden kann. Die Foliendicke liegt etwa unterhalb von 0.5mm, vorzugsweise unter 0.2mm insbesondere unter 0.05mm. Die Schottschicht bzw. Folie soll im Wesentlichen ohne Formaufwand in die Form der Aussenhaut gebracht werden können.

Die Innenhaut soll textiles Drahtmaterial, insbesondere ein Drahtgewebe, umfassen, welches feuchtigkeitsdurchlässig und reibungsfest ist.

Zwischen der Innenhaut und der Aussenhaut wird Isoliermaterial mit langfaseriger Silikatfaserwolle angeordnet. Damit dieses Isoliermaterial vollständig umschlossen ist, sind Verbindungsflächen von der Innenhaut zur Aussenhaut ausgebildet. Diese Verbindungsflächen bilden Stirnseiten oder Längsseiten der Isolierelemente bei denen Isolierelemente in gegenseitigen Kontakt gebracht werden können. Die Verbindungsflächen erstrecken sich quer, insbesondere senkrecht, zu den angrenzenden Bereichen der Innen- und der Aussenhaut, bzw. zu den Bauteiloberflächen. Die Verbindungsflächen umfassen vorzugsweise textiles Drahtmaterial, insbesondere Drahtgewebe. Verbindungsflächen, die bei einer montierten Isolierung von aussen zugänglich sind, umfassen vorzugsweise auch eine betriebsbeständige Schottschicht, insbesondere eine Metallfolie, die den Eintritt von Ölspritzern verhindert.

Bei einer Innenhaut aus textilem Drahtmaterial liegt nur ein minimaler Anteil der Gesamtfläche am heissen Bauteil an, weil ja die Oberflächenstruktur einer textilen Fläche nicht eben ist. Bereits ein gerader Draht kann nur linienförmig an einer glatten Oberfläche anliegen. Bei einer textilen Fläche aus Draht werden die vorstehenden Kontaktstellen von gekrümmten Drahtbereichen gebildet und sind somit im Wesentlichen lediglich punktförmig. Daher strömt nur ein minimaler Anteil der Wärme aufgrund der Wärmeleitung der Innenhaut vom Bauteil weg. Weil die Wärmeleitzahl der Metalldrähte ca. 1000 mal grösser ist als jene von Luft und ca. 500 mal grösser als jene von Silikatfaserwolle, ist es wichtig, dass die Wärmeleitung durch die Hülle aufgrund des minimalen Kontaktes klein bleibt. Eine Innenhaut aus Draht erzeugt im Vergleich zur Bauteiloberfläche ein Strahlungsfeld auf einer tieferen Temperatur und zudem hat sie aufgrund der stark strukturieren Oberfläche ein ganz anderes Abstrahlverhalten als eine ebene Bauteilfläche.

Die Aussenhaut in der Form einer spritzfesten Folie, vorzugsweise einer Chromstahlfolie, wird nach dem Einlegen von Isoliermaterial über stegförmige Verbindungen mit der Innenhaut, in der Form eines textilen Drahtmaterials, verbunden. Gegebenenfalls wird das Isoliermaterial in einer Schutzhülle aus Glasfaserstoff eingelegt. Die Schutzhülle kann gewährleisten, dass die Fasern des Isoliermaterials immer im Hüllenbereich verbleiben. Dies kann auch durch das Vorsehen eines Mikrofilter-Metallgewebes im Bereich der Innenhaut und insbesondere auch der Verbindungsflächen erzielt werden, weil-dann ein Austritt der Fasern bei der Aussenhaut durch die Metallfolie und bei der Innenhaut durch das Mikrofilter-Metallgewebe verhindert wird.

Wenn nun das Mikrofilter-Metallgewebe auch als reibungsfeste Schicht eingesetzt wird, so muss es aus genügend hartem Draht gebildet werden. Weil reibungsfeste Mikrofilter-Metallgewebe sehr teuer sind, ist es auch möglich bei der Innenhaut ein grobporiges reibungsfestes textiles Drahtmaterial mit einem nicht reibungsfesten aber feinporigen Drahtgewebe zu kombinieren, so dass die Reibung am Bauteil vom grobporigen und das Zurückhalten der Fasern von feinporigen Drahtmaterial übernommen wird. Entsprechend ist das grobporige Drahtgewebe dem Bauteil zugewandt und das feinporige dem Isoliermaterial. Das grobporige textile Drahtmaterial soll formstabil sein, so dass eine an das Bauteil angepasste Form im Wesentlichen immer bestehen bleibt.

Die Bauteile können in Umfangsrichtung durch ein Schalenelement, oder durch mindestens zwei miteinander verbundene Schalenelemente umgeben werden. Bei zwei Schalenelementen in Umfangsrichtung sind zwei sich entlang der Bauteilachse erstreckende Verbindungen mit Kontaktbereichen der beiden Elemente nötig. Die Kontaktbereiche werden von Verbindungsflächen, welche die Innenhaut mit der Aussenhaut verbinden, gebildet. Zum Abdecken der Kontaktbereiche sind entlang der Verbindungen Abdeckflächen vorgesehen. Diese Abdeckflächen umfassen vorzugsweise Metallfolien. Die Anordnung der Abdeckflächen ist so gewählt, dass kein Öl durch die Kontaktbereiche zum Bauteil fliessen kann. Mit Abdeckflächen können zwischen den Elementen auch Labyrinthdichtungen ausgebildet werden. Bei Kompensatoren auch kompensierende Abdeckungen, die den Eintritt von Öl verhindern. Die Elemente werden beispielsweise mittels Spannbändern am Bauteil gehalten. Im Bereich der Spannbänder und insbesondere bei den Verbindungsflächen soll die Formstabilität ein dichtes aneinander Anliegen ohne unerwünschte Verformung gewährleisten.

Damit bei der Aussenhaut eine dünne betriebsbeständige Schottschicht eingesetzt werden kann und das Element trotzdem eine minimal nötige Stabilität bei der Aussenhaut gewährleistet, wird etwa direkt aussen an der Folie ein textiles Drahtmaterial mit einem genügend dicken Drahtdurchmesser angeordnet. Dieses textile Drahtmaterial gewährleistet nebst der erhöhten Stabilität auch einen Kontaktschutz. Wenn eine Hand mit der erwärmten Aussenhaut in Kontakt kommt, ist der Wärmefluss durch das Drahtmaterial wesentlich kleiner als bei einem direkten Kontakt mit der Folie. Die Formgebung mit anschliessender Formstabilität kann mit dem Drahtmaterial erzielt werden, was mit einer Folie nicht möglich ist. Auch die Abdeckflächen können aus einer Folienlage und mindestens einer Drahtmaterial-Lage gebildet werden.

Die bevorzugten Fasermatten bestehen aus langen Fasern und sind bei Vibrationen bezüglich des Freisetzens von Einzelfasern sehr beständig. Insbesondere sind die Fasern ohne Bindemittel zu einer filzähnlichen Matte verfilzt. Auch wenn die Matten bezüglich Reibung nicht beständig sind, so können sie trotzdem in einer reibungsbeständigen Hülle eingesetzt werden, ohne dass sie im Gebrauch zerfallen. Dies liegt daran, dass die Reibung zwischen dem Bauteil und der Isolierung im Wesentlichen auf die reibungsfeste Hülle beschränkt ist. Wenn Fasermaterial verwendet wird, bei dem sich Einzelfasern lösen, bzw. das lose Fasern umfasst, so wird ein Hüllenmaterial mit einer genügend kleinen Filterfeinheit gewählt, so dass die losen Fasern im wesentlichen nicht aus der Hülle austreten können. Die bevorzugte Fasermatte aus Silikatfasern hat Faserlängen im Bereich von 30-70mm insbesondere -im wesentlichen von 50mm und Durchmesser im Bereich von 2µm bis 4µm. Tests haben gezeigt, dass diese Fasern von einem Mikrofilter-Metallgewebe mit einer Filterfeinheit von 20µm vollständig zurückgehalten werden.

Das Isoliermaterial kann gegebenenfalls in der Form von losen Fasern, oder insbesondere von Partikeln, in faserdichte bzw. partikeldichte Hüllen eingefüllt werden. Dabei soll die Form des Isolierelementes durch die Formstabilität der Hülle, bzw. der Innenhaut, Aussenhaut und der Verbindungsflächen gegeben sein, was mit stabilitätsgebendem textilem Drahtmaterial erzielbar ist. Die Fasern bzw. Partikel des Isoliermaterials werden dabei vor dem vollständigen Verschliessen der Hülle in die Hülle eingefüllt. Wenn Fasern im Wesentlichen in der Form von Schüttgut in die Hülle eingebracht werden können, fällt das Zuschneiden von schichtförmigen Fasermaterial-Zuschnitten weg. Bei der Formgebung der Isolierelemente muss nicht auf die handelsübliche Schichtdicke von Isoliermatten Rücksicht genommen werden. Die Schichtdicke des eingefüllten Isoliermaterials kann variieren.

Bei Ausführungsformen mit schichtförmigem Isoliermaterial wird bevorzugt eine Fasermatte verwendet, die unter dem Namen Superwool® im Handel ist und aufgrund der Klassifikationstemperatur von 1050°C bis zu Temperaturen von 1000°C eingesetzt werden kann. Diese Matte besteht aus Erdalkali-Silikat-Fasern und ist gesundheitlich unbedenklich, weil sich die Fasern durch bzw. in Körperflüssigkeiten auflösen. Dies ist ein wichtiger Vorteil gegenüber den handelsüblichen Keramik-Fasermatten, die gegebenenfalls die Gesundheit gefährden. Die Silikat-Fasermatte zeichnet sich auch im Dauereinsatz bei hohen Temperaturen durch eine geringe Wärmeleitfähigkeit, eine geringe Schwindung und eine hohe Vibrationsbeständigkeit aus. Die zu-verwendende Schichtdicke hängt vom Temperaturbereich der zu isolierenden Abgasleitungen, von der zulässigen Temperatur an der Aussenhülle und von den Platzverhältnissen ab. Bereits mit Fasermaterial mit einer Schichtdicke von 25mm können sehr gute Messresultate erzielt werden. Die Schichtdicke des Fasermaterials sollte, wenn möglich mindestens 10mm betragen. Bei kleinen Bauteilen wird gegebenenfalls auch Fasermaterial mit eine Schichtdicke im Bereich von 5mm bis 10mm eingesetzt. Um keinen unnötig grossen Platz zu beanspruchen, wird die Schichtdicke nur bei speziellen Anwendungen grösser als 50mm sein. Das Fasermaterial gewährt nebst einer tiefen Wärmeleitungsfähigkeit eine minimale konvektive Luft-Durchströmung und wirkt diffraktiv im Wärmestrahlungsfeld, so dass ein grosser Wärmerückhalt und entsprechend ein grosser Temperaturgradient erzielbar ist.

Bei der Verwendung von Isolierelementen mit textilem Drahtmaterial, gegebenenfalls Glasfaserstoff, Metallfolie und elastischem Isoliermaterial ist die Isolierung etwas nachformbar und kann somit die Form in gewissen Grenzen dem zu isolierenden Körper anpassen. Das Isoliersystem ist trotz weichem Isolierkörper formstabil. Dort wo extreme Längenänderungen infolge von hohen Temperaturen (z.B. bei Auspuffleitungen) durch Metallkompensatoren kompensiert werden, kann die Isolierkomponente zumindest im Bereich des Kompensators flexibel ausgeführt werden, so dass das Isoliersystem die Bewegungen der Auspuffleitung mitmacht. Ansonsten könnte das Isoliersystem selbst und/oder der Kompensator zerstört werden. Ein Isolierelement für einen Kompensator umfasst vorzugsweise einen Bereich mit einer balgförmigen Innenhaut und gegebenenfalls auch einer balgförmigen Aussenhaut. Gegebenenfalls aber wird zumindest die Schottschicht nicht balgförmig sondern mit überlappenden Bereichen, insbesondere mit einer labyrinthartigen Überlappung, ausgebildet. Ein Bereich der Innenhaut, welcher auf den zu isolierenden Körper zu liegen kommt, muss widerstandsfähig sein gegen Relativ-Bewegungen, die durch mechanische Schwingungen hervorgerufen werden. Das Isoliermaterial ist aufgrund der langen Fasern vibrationsbeständig.

Das erfindungsgemässe Wärme-Isoliersystem dämpft auch die Schallabstrahlung. Beim Lösen der zusätzlichen Schalldämungs-Aufgabe wurde erkannt, dass alle möglichen Schalldämpfungsmassnahmen möglichst vollständig wirksam sein sollten. Mit mindestens zwei verschiedenen Dämpfungsmembranen, nämlich der Folie bei der Aussenhaut und der Innenhaut, die zumindest teilweise aus Draht, oder gegebenenfalls aus drahtähnlichem Material gebildet ist, wird ein breitbandiges Absorptionsspektrum erzielt. Die zumindest teilweise aus Draht hergestellte Dämpfungsmembran ist vorzugsweise als Gewebe, gegebenenfalls aber als Geflecht, Maschenware, Drahtnetz oder Drahtgitter ausgebildet. Es handelt sich also vorzugsweise um eine textile Fläche bzw. um textiles Material aus Draht. Die Dämpfungsmembran hat vorzugsweise eine Dichte im Bereich der Dichten von metallischen Materialien. Dadurch wird die Trägheit der Dämpfungsmembran so erhöht, dass sie im Tieftonbereich eine inelastische Dämpfung erzielbar macht. Es versteht sich von selbst, dass die Trägheit der Dämpfungsmembran entsprechend der jeweiligen Anwendung bzw. dem effektiven Frequenzspektrum durch die Anpassung der Foliendicke bzw. des Drahtquerschnittes, des Drahtmaterials und der Gewebestruktur optimiert werden kann. Eine Dämpfungsmembran die gewebeartig aus Draht gebildet ist, macht nebst der inneren Reibung in den Drähten auch eine mechanische Reibung zwischen einander kontaktierenden Drahtabschnitten erzielbar. Diese Reibung gewährleistet eine hohe Schallabsorptionsfähigkeit der mitschwingenden Dämpfungsmembran.

Aufgrund ihrer textilen Struktur hat die Innenhaut keine als Reflexionsfläche wirkenden Teilbereiche mit glatter Oberfläche. Die textile bzw. gewebeähnliche Struktur umfasst Durchtrittsöffnungen und ist für den Hochtonbereich durchlässig. Der Hochtonanteil wird nach dem Durchtritt durch die Innenhaut im weichen Isoliermaterial stark absorbiert. Das Isoliermaterial besteht aus Partikeln oder Fasern, insbesondere aus langfaserigem Schichtmaterial, vorzugsweise aus Silikatfasermatten und weist dabei zusammenhängende Luftkanalsysteme zur Hochtonabsorption auf. Bereits beim Durchtritt des Hochtonanteils durch die, insbesondere mit einem Tieftonanteil mitschwingende, Membran tritt eine Dämpfung an den Gewebedurchtrittsöffnungen auf. Die hohe Dichte äusserst kleiner Durchtrittsöffnungen ermöglicht stark reibungsaktive, bzw. Turbulenz bildende Luftbewegungen relativ zur Membran. Ein rein elastisches Mitschwingen der Dämpfungsmembran wird dadurch verhindert. Diese Gewebedurchtrittsöffnungen sind nicht wie bei Lochblechen als Eintrittsöffnungen von diskreten Resonatoren zu verstehen. Daher ist die Absorption auch nicht auf enge Frequenzbereiche beschränkt.

Für die Schalldämpfung ist ein beliebiges Drahtgewebe als Dämpfungsmembran einsetzbar, wobei aber aufgrund der hohen Temperaturen und der möglichen Feuchtigkeit, wie bereits beschrieben, vorzugsweise Chrom-, bzw. Edelstahldraht verwendet wird. Wenn eine Dämpfungsmembran nicht direkt an der heissen Bauteiloberfläche anliegt, kann deren textile Fläche gegebenenfalls auch aus synthetischen, vorzugsweise aber aus Glas- oder Keramikfaser-Fäden, gegebenenfalls mit eingeflochtenen Drähten, gebildet sein, wenn damit ähnliche Massen-Flächendichten, Luftdurchlässigkeiten, Schwing- und Reibungs-bzw. Dämpfungseigenschaften erzielt werden. -

Flachmaterial aus Draht, das bei der Innen und gegebenenfalls bei der Aussenhaut eingesetzt wird, ist aus Draht gebildet, dessen Durchmesser im Bereich von 0,002mm bis 6mm, insbesondere von 0,018mm bis 3mm liegt. Die offene Fläche des Flachmaterials aus Draht liegt im Bereich von 10% bis 95%, vorzugsweise von 25% bis 90%, der Gesamtfläche. Die Grösse der einzelnen Öffnungen hängt von der jeweiligen Funktion des Flachmateriales aus Draht ab. Zunehmende mesh-Werte entsprechen abnehmenden Sieböffnungs-Durchmessern bzw. Maschenweiten.

Um die Fasern oder Partikel des Isoliermaterials zurück zu halten, wird etwa ein feines Drahtgewebe eingesetzt, beispielsweise ein Mikrofilter-Metallgewebe mit der Filterfeinheit von 20µ, mit einem Kettdraht-Durchmesser von 0.042mm, einem Schussdraht-Durchmesser von 0.125mm und einer Maschenzahl von 600x125 Maschen/cm². Die Drähte eines besonders geeigneten Mikrofilter-Flachmaterials haben Durchmesser im Bereich von 0.02mm bis 0.4, insbesondere von 0.04mm bis 0.13mm und die Maschenzahl in einer Richtung liegt im Bereich von 80 bis 1000 Maschen/cm. Der Werkstoff eines bevorzugten Drahtes wird mit WN1.4539 bezeichnet. Dieser Werkstoff kann bis zu Temperaturen von 1000°C, bzw. im Dauerbetrieb über 450-800°C, eingesetzt werden.

Als grobes Drahtgewebe wird bevorzugt ein Drahtgewebe mit weniger als 400, insbesondere mit im Wesentlichen 130 Maschen/cm² (mesh/ cm²) und einer offenen Fläche im Bereich von 40-55%, beispielsweise von ca. 51 % eingesetzt. Das Gewicht dieses Drahtgewebes beträgt ca. 0.910kg/m² bei einem Drahtdurchmesser von ca. 0.25mm. Der Drahtdurchmesser soll mindestens 0.1 mm, gegebenenfalls mindestens 0.2mm insbesondere im Wesentlichen 0.25mm betragen. Es hat sich gezeigt, dass dieses grobe Drahtgewebe eine gute Schallabsorption im tiefen Frequenzbereich erzielbar macht. Zudem kann das Drahtgewebe durch die Wahl eines geeigneten Drahtmateriales reibungsfest ausgebildet und als Reibungsschicht, die am Bauteil anliegt, eingesetzt werden.

Aufgrund der guten Formbarkeit und der nach dem Formen hohen Stabilität gegenüber unerwünschten Verformungen, ist das grobporige Drahtgewebe auch vorteilhaft in Kombination mit der betriebsbeständigen Schottschicht, insbesondere einer Metallfolie, einsetzbar. So kann beispielsweise die Aussenhaut des Isolierelementes aus einer Kombination einer Metallfolie mit dem grobporigen Drahtgewebe ausgebildet werden. Die dünne Metallfolie wird dabei auf der dem Isoliermaterial zugewandten Seite des grobporigen Drahtgewebes angeordnet. Diese zweischichtige Aussenhaut kombiniert die Dichtheit einer betriebsbeständigen Schottschicht, bzw. den Schutz vor dem Eintritt von Ölspritzern, mit der Formstabilität des grobporigen Drahtgewebes. Zur Befestigung der Metallfolie am Drahtgewebe, können Punkt-oder Linienschweissungen eingesetzt werden. Nicht erfindungsgemäβ können bei einer nicht schweissbaren Schottschicht andere Verbindungen, wie etwa Klebeverbindungen, Falzverbindungen oder Verbindungen mit Verbindungselementen, wie beispielsweise Nieten, eingesetzt werden. Die Dicke der Schottschicht wird gegebenenfalls kleiner als der Drahtdurchmesser des grobporigen Drahtgewebes gewählt. Insbesondere ist diese Dicke kleiner als der halbe Drahtdurchmesser, so dass mit kleinem Materialaufwand eine dichte und stabile Aussenhaut bereitgestellt werden kann.

Wenn sich Drahtgewebe von der Innenhaut und von der Aussenhaut entlang der Verbindungsflächen erstreckt, so kann die Innen- und die Aussenhaut mit dazwischen liegendem Isoliermaterial so ineinander gefügt werden, dass sich die vorstehenden Drahtgewebebereiche bei den Verbindungsflächen überlappen und dort eine Schweissverbindung ausgebildet werden kann. Dabei liegen die Schweissverbindungen in einem nach der Montage nicht sichtbaren Bereich. Wenn Randbereiche der Verbindungsflächen um die Innen- oder Aussenhaut umgelegt und dort verschweisst werden, so ist dies weniger attraktiv und bei einer Schweissung an der Aussenhaut mit dem Nachteil einer erhöhten Wärmeleitung bzw. erhöhter Temperaturen bei den Schweissverbindungen verbunden.

Die Erfindung umfasst Ausführungsformen bei denen die Innen- und/oder Aussenhaut aus mindestens zwei Lagen zusammengestellt ist. Wenn das Isoliermaterial in einer Hülle aus Glasfasergewebe angeordnet ist, wird eine dem Bauteil zugewandte Lage dieser Hülle der Innenhaut und eine vom Bauteil abgewandte Lage dieser Hülle der Aussenhaut zugeordnet. Die zweite Lage der Innenhaut wird von einem reibungsfesten Drahtgewebe, insbesondere einem grobporigen Drahtgewebe gebildet. Die zweite Lage der Aussenhaut wird von einer Metallfolie gebildet. Gegebenenfalls umfasst die Aussenhaut eine dritte Lage in der Form eines Drahtgewebes, insbesondere eines grobporigen Drahtgewebes. Die Fasern des Isoliermaterials werden von der Hülle aus Glasfasergewebe zurückgehalten.

Bei einer Ausführungsform ohne Glasfasergewebe, wird die faserdichte Umhüllung des Isoliermaterials bei der Innenhaut - vorzugsweise auch bei den Verbindungsflächen - von einem feinporigen Drahtgewebe und bei der Aussenhaut von einer Metallfolie gewährleistet. Eine zweite Lage wird bei der Innenhaut, gegebenenfalls auch bei der Aussenhaut und insbesondere bei den Verbindungsflächen von einem grobporigen Drahtgewebe gebildet.

Bei einem bevorzugten Herstellungsverfahren wird zumindest eine Schicht bei der Aussenund/oder Innenhaut mit einem Tiefziehschritt in die gewünschte Form gebracht. Metallfolien und auch Drahtgewebe können mittels Tiefziehen und/oder Pressen gut in dreidimensionale Formen geformt werden. Wenn nun Isolierelemente hergestellt werden, bei denen eine Innen- oder Aussenhaut an Verbindungsflächen aus dem gleichen Material anschliesst, so kann mit mindestens einem Tiefziehschritt aus einem Flachmaterial eine umgeformte Fläche gebildet werden, welche die Aussenhaut und mindestens einen Teil der Verbindungsflächen umfasst. Innen- und Aussenhäute mit Verbindungsflächen können mittels Tiefziehen oder Pressen einfach hergestellt werden. Wenn die Innenhaut aus einem feinporigen und einem grobporigen Drahtgewebe sowie die Aussenhaut aus einer Folie und einem grobporigen Drahtgewebe zusammengestellt sind, können gegebenenfalls die beiden Lagen je zusammen umgeformt werden.

Bei einem weiteren bevorzugten Herstellungsverfahren wird, wie bereits oben beschrieben, zumindest ein Teil des Isoliermaterials im Wesentlichen in der Form von Fasern bzw. Faserschüttgut in die Hüllen eingebracht. Die Form der Isolierelemente wird durch das Formen und Zusammenstellen der Hüllenelemente gegeben.

Im Rahmen der Erfindung wurden auch Isolierelemente mit einer Durchlüftung entwickelt. Diese wurden im Bereich von Bauteilen, insbesondere Ventilen, mit einer Temperaturbeschränkung nötig, weil die erfindungsgemässe Isolierung aufgrund der äusserst kleinen Wärmeverluste bei diesen Teilen zu Temperaturen über der zulässigen Höchsttemperatur geführt haben. Mit einer gezielten Konvektion wird das betroffene Teil im Bereich zulässiger Temperaturen gehalten sowie sichergestellt, dass die abströmende Luft eine Temperatur aufweist die keine Entzündung von entzündbaren Stoffen auslöst und die auch bei Handkontakt keine Verbrennungen verursacht. Die für die Luftführung benötigte Öffnung ist so ausgebildet, dass keine Ölspritzer ins Innere der Isolierung gelangen können.

Die Zeichnungen erläutern die erfindungsgemässe Isolierung anhand von Ausführungsbeispielen. Dabei zeigt
- Fig. 1: eine perspektivische Darstellung von zwei ringförmig zusammenstellbaren Isolierelementen,
- Fig. 2: einen Ausschnitt aus dem unteren Isolierelement der Fig. 1,
- Fig. 3: eine andere Ausführungsform eines Ausschnittes gemäss Fig. 2, und
- Fig. 4: eine perspektivische Darstellung eines seitlich aufgeschnittenen Isolierelementes mit zwei Durchlüftungskanälen

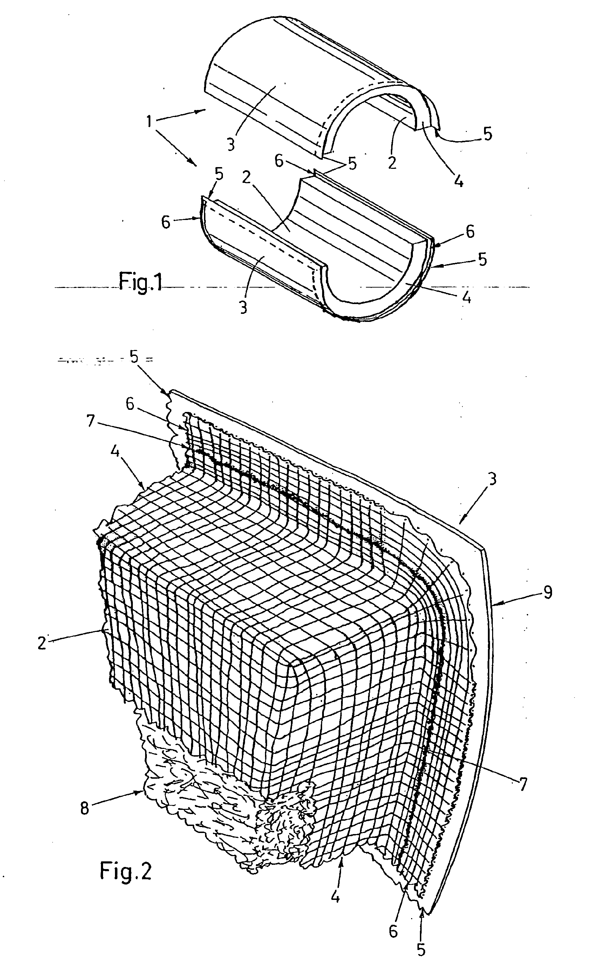

FIG.1 zeigt zwei Isolierelemente 1 zum Isolieren eines nicht dargestellten Rohrabschnittes. Jedes Isolierelement 1 umfasst eine Innenhaut 2, eine Aussenhaut 3 und Verbindungsflächen 4, die sich von der Innenhaut 2 zur Aussenhaut 3 erstrecken. Die Innenhaut 3 liegt beim dargestellten Ausführungsbeispiel an der Aussenfläche des zu isolierenden Rohrabschnittes an und umfasst mindestens eine Lage von aus Draht hergestelltem Flachmaterial, insbesondere ein Drahtgewebe. Die Verbindungsflächen 4 sind quer, vorzugsweise im Wesentlichen senkrecht, zur Aussenfläche des Rohrabschnittes ausgerichtet. Um mögliche dünne Austrittsspalte zwischen den Verbindungsflächen von zusammengestellten Isolierelementen 1 abzudecken, sind entlang der Verbindungen Abdeckflächen 5 vorgesehen. Die Aussenhaut 3 und diese Abdeckflächen 5 umfassen Metallfolien und gewährleisten damit, dass kein Öl zum Bauteil fliessen kann. Mit Abdeckflächen können zwischen aneinander anschliessenden Elementen auch Labyrinthdichtungen ausgebildet werden. Bei Kompensatoren kann mit kompensierenden Labyrinthverbindungen der Eintritt von Öl verhindert werden. Die Elemente werden beispielsweise mittels Spannbändern am Bauteil gehalten.

Die in Umfangsrichtung verlaufenden Abdeckflächen 5 können zusammen mit nicht dargestellten Spannbändern dazu benützt werden, in Achsrichtung aneinander anschliessende Isolierelemente fest miteinander zu verbinden. Dabei werden die über den Endbereich von aneinander anschliessenden Isolierelementen 1 vorstehenden Abdeckflächen Im Bereich der Spannbänder festgeklemmt. Um beim Spannen der Spannbänder keine unerwünschte Verformung zu erzeugen, wird gegebenenfalls zumindest der Endbereich durch die Wahl von genügend stabilen Verbindungsflächen 4 verstärkt ausgebildet. Die Verbindungsflächen 4 umfassen etwa mindestens eine Lage von aus Draht hergestelltem Flachmaterial, insbesondere ein Drahtgewebe. Bei den stirnseitigen Verbindungsflächen werden gegebenenfalls Silikatfaserplatten angeordnet, um der Isolierung die notwendige Steifigkeit zu verleihen, um eine leichte Montage zu ermöglichen und um Axialkräfte aufnehmen zu können.

Um eine einfache Herstellung von Isolierelementen 1 gemäss Fig. 1 und 2 zu ermöglichen, wird zumindest eine Lage der Innenhaut 2 zusammen mit mindestens einer, vorzugsweise aber mit allen, Verbindungsflächen 4 aus einem Stück Drahtgewebe hergestellt. Der mittlere Bereich mit der Flächenausdehnung der Innenhaut 2 wird in einem ersten Formschritt mittels Tiefziehen in einer Form so nach unten gedrückt, dass sich ein von der Ebene der Innenhaut weg führender Mantelbereich als zusammenhängende Verbindungsfläche 4 ausbildet. Beim Tiefziehen wird das Drahtgewebe im Randbereich um eine äussere Umlenkkante in den Bereich der Verbindungsfläche 4 gezogen. Am Ende des Tiefziehvorganges soll ein äusserster Randbereich 6 in der ursprünglichen Ebene des Drahtgewebes also im Wesentlichen senkrecht zur Verbindungsfläche 4 bestehen bleiben. Gegebenenfalls wird nun der einen tief gezogenen Lage noch mindestens eine weitere Lage der Innenhaut 2 zugeordnet. Wenn die erste Lage ein grobporiges Drahtgewebe ist, so wird beispielsweise ein analog hergestelltes feinporiges Drahtgewebe in das grobporige eingelegt. Das feinporige Drahtgewebe hält die Fasern von Isoliermaterial 8 zurück und das grobporige Drahtgewebe gewährleistet die nötige Stabilität und gegebenenfalls Reibungsfestigkeit.

In einem zweiten Umformschritt muss nun die Innenhaut 2 mit den Verbindungsflächen 4 so umgeformt werden, dass sie an das Bauteil bzw. den Rohrabschnitt angelegt werden kann. Dazu wird das tief gezogene Drahtgewebe beispielsweise mit einem Pressstempel in eine entsprechende Form gepresst. In einem dritten Umformschritt werden die Verbindungsflächen 4, die noch nicht richtig ausgerichtet sind, so ausgerichtet, dass sie im Wesentlichen senkrecht von der Innenhaut 2 weg führen. Der äusserste Randbereich 6 soll am Ende der Umformung im Wesentlichen senkrecht zur angrenzenden Verbindungsfläche 4 nach aussen gerichtet sein, so dass er mit einer Schweissnaht 7 oder Schweisspunkten an der Aussenhaut 3 befestigt werden kann.

Es könnte auch die Aussenhaut mit zumindest einem Tiefziehschritt in die gewünschte Form gebracht werden. Es versteht sich von selbst, dass anstelle der Herstellung mit den beschriebenen Umformschritten gegebenenfalls andere Formschritte oder auch eine Zusammenstellung von Zuschnittteilen zur gewünschten Endform möglich sind. Beim Zusammenstellen von Zuschnittteilen müssen aber mehr Verbindungsschritte durchgeführt werden.

Bevor die Aussenhaut 3 am äussersten, mit der Innenhaut 2 verbundenen, Randbereich 6 befestigt wird, muss Isoliermaterial 8 in das Formstück mit Innenhaut 2, Verbindungsfläche 4 und Randbereich 6 eingebracht werden. Dazu können Zuschnitte aus schichtförmigen Isoliermatten eingelegt werden. Gegebenenfalls wird aber vor dem vollständigen Verschliessen der Hülle durch mindestens eine Einfüllöffnung Isoliermaterial in der Form von pneumatisch' förderbaren Fasern in die Hülle eingebracht, bzw. eingeblasen. Nach dem vollständigen Ausbilden der Schweissnaht 7 entlang des gesamten Randbereiches 6 ist das Isoliermaterial 8 von faserdichten Randflächen 2, 4 und 3 umschlossen. Die Innenhaut 2 und die Verbindungsflächen 4 sind dampf- bzw. feuchtigkeitsdurchlässig. Dadurch werden Schäden, welche durch plötzliches Verdampfen an der Innenhaut 2 entstehen könnten, vermieden. Im dargestellten Ausführungsbeispiel wird die Aussenhaut 3 von lediglich einer Metallfolie 9 gebildet. Diese gewährleistet an der Aussenfläche des Isolierelementes 1 einen Schutz gegen eindringendes Öl. Der über die Verbindungsflächen 4 vorstehende Bereich der Aussenhaut 3 bildet die Abdeckflächen 5.

Weil die öldichte Lage der Aussenhaut 3 vorzugsweise von einer dünnen Metallfolie 9, beispielsweise mit einer Dicke von lediglich 0.1 mm, gebildet wird, besteht die Gefahr, dass die Folie verletzt wird, und dass an den verletzten Stellen Öl durch das Isoliermaterial 8 und die Innenhaut 2 bis zum heissen Bauteil gelangen kann. Es wäre nun möglich, dass anstelle einer verletzlichen Metallfolie eine weniger verletzliche Metallfolie oder eine Folie aus einem anderen äusserst robusten Material, wie etwa Karbon, eingesetzt würde. Dabei müsste anstelle des Schweissvorganges eine andere Verbindungsart gewählt werden, die hitzebeständig und mechanisch robust ist.

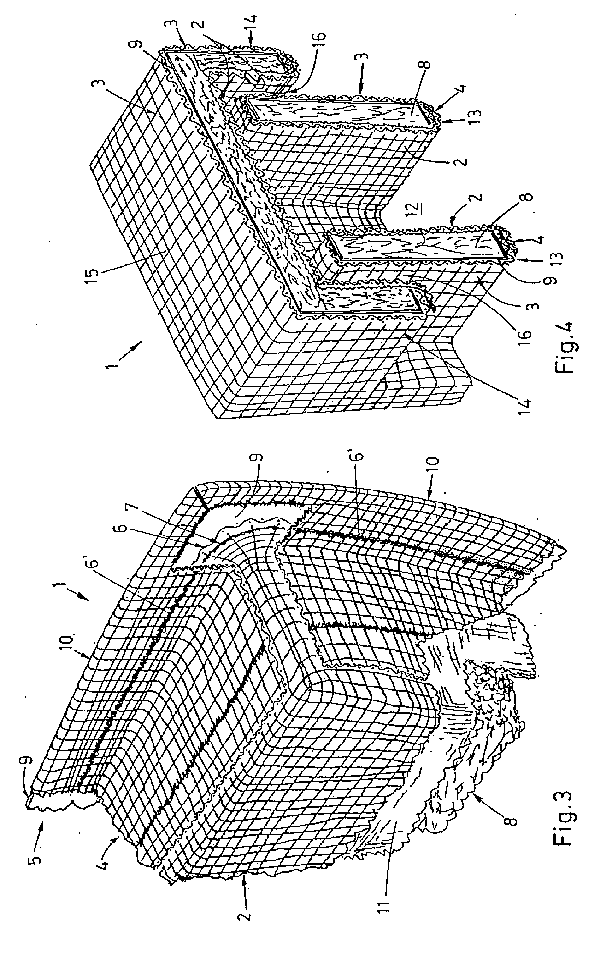

Fig. 3 zeigt eine Ausführungsform bei der die Aussenseite der Metallfolie 9 von einer Schutzlage 10 in der Form eines grobporigen Drahtgewebes überdeckt wird. In Bereichen des Isolierelementes 1, in denen eine Abdeckfläche 5 seitlich vorsteht, umschliesst die Schutzlage 10 die Abdeckfläche 5. Wenn sich die Schutzlage 10, wie in Fig. 3 dargestellt, auch noch über einen Teilbereich der Verbindungsflächen 4 erstreckt, so kann die Stabilität der Verbindungsflächen 4 erhöht werden. In Bereichen mit einer Abdeckfläche 5 wird die Schutzlage 10 mit einer Schweissnaht 6' oder mit Schweisspunkten an der Rückseite der Abdeckfläche 5 und gegebenenfalls mit einer weiteren Schweissnaht 6" an der Verbindungsfläche 4 befestigt. In Bereichen ohne Abdeckfläche 5 wird die Schutzlage 10 nur mit einer Schweissnaht 6" an der Verbindungsfläche 4 befestigt. Die Randbereiche der Schutzlage 10 werden abschnittweise um die Abdeckfläche 5 und/oder an die Verbindungsfläche 4 angelegt.

Die Schutzlage 10 in der Form eines grobporigen Drahtgewebes schützt die Metallfolie 9 vor Verletzungen und bietet zudem einen Kontaktschutz, weil eine Berührung auch bei erhöhter Temperatur nicht zu Verbrennungen führt, wie dies bei einer ebenen Folienfläche der Fall wäre. Ein weiterer Vorteil der Schutzschicht besteht darin, dass der Aussenfläche der Isolierelemente eine im Wesentlichen feste Form gegeben werden kann. Wobei die Form mit genügend hohen Verformungskräften bei der Montage noch etwas angepasst werden kann, was sicher im Bereich der Abdeckflächen für ein dichtes Anliegen zum Teil nötig sein wird. Die veränderte Form bleibt bestehen.

Im Ausführungsbeispiel gemäss Fig. 3 ist das Isoliermaterial zusätzlich-in-einer Hülle 11 aus Glasfasergewebe aufgenommen. Weil nun diese Hülle den Austritt von Fasern verhindert, kann die Innenhaut 2 von einem grobporigen Drahtgewebe gebildet werden. Das Glasfasergewebe ist feuchtigkeits- bzw. dampfdurchlässig.

Die erfindungsgemässen Isolierelemente können an die jeweiligen Bedürfnisse angepasst werden, in dem sowohl die Innenhaut 2 als auch die Aussenhaut durch eine Zusammenstellung von Lagen mit verschiedenen Eigenschaften aufgebaut wird. Bei Isolierungen, welche direkt an vibrierenden Bauteiloberflächen anliegen, wird die ans Bauteil anliegende Seite der Innenhaut 2 jeweils von reibungsfestem Drahtgewebe gebildet. Die faserdichte Lage der Innenhaut muss dann nicht mehr reibungsfest sein und kann aus einem günstigeren Material gebildet werden. Die Schutzlage 10 muss auch nicht reibungsfest sein und kann somit aus wenig veredeltem Drahtgewebe gebildet werden.

Fig. 4 zeigt ein Isolierelement 1, das zur Isolierung eines hitzeempfindlichen Ventils eingesetzt werden kann. Der Aufnahmeraum 12 für das Ventil wird von vier ersten Wandbereichen 13 umgeben, welche aus einer Aussenhaut 3, einer Innenhaut 2 und dazwischen liegendem Isoliermaterial 8 aufgebaut sind. Bei der Montage wird die Verbindungsfläche 4 an ein anschliessendes Isolierelement angelegt. Die Innen- und die Aussenhaut der Wandbereiche 13 umfasst je ein grobporiges Drahtgewebe. jede Aussenhaut 3 umfasst zudem eine Metallfolie 9 und jede Innenhaut 3 ein innen am grobporigen Drahtgewebe angeordnetes feinporiges Drahtgewebe. Bei der Verbindungsfläche 4 sind die Lagen der Innen- und der Aussenhaut 2, 3 miteinander verschweisst.

Auf zwei Seiten ist je ein zweiter Wandbereich 14 am oberen Endbereich etwas nach aussen versetzt angeordnet. Die zweiten Wandbereiche 14 sind analog aufgebaut, wie die ersten Wandbereiche 13. Eine stirnseitige Abschlusswand 15 schliesst das Isolierelement 1 am oberen Ende ab. Die Abschlusswand 15 ist ebenfalls analog zu den ersten und zweiten Wandbereichen 13, 14 aufgebaut. Die beiden zweiten Wandbereiche 14 und zwei zugeordnete erste Wandbereiche 13 gehen in die Abschlusswand 14 über. Vom Aufnahmeraum 12 führen zwei Durchlüftungskanäle 16 über die ersten Wandbereiche 13 und unter den zweiten Wandbereichen 14 zur Aussenseite des Isolierelementes 1. Die labyrinthartige Ausbildung der Durchlüftungskanäle 16 und die Metallfolien 9 der Aussenhäute 3 stellen sicher, dass kein Öl zum heissen Bauteil mit dem Ventil gelangen kann. Stauwärme beim Ventil bzw. im_Aufnahmeraum 12_kann_mittels_Koravektion_nach_aussen_abgeführt_werden. Durch die Dimensionierung der Durchlüftungskanäle 16 kann ein Kamineffekt und ein gewünschter Luftdurchsatz erzielt werden, wobei der Luftdurchsatz so hoch sein soll, dass die austretende Luft nicht soweit überhitzt ist, dass eine Entzündungsgefahr oder im Kontakt mit Haut eine Verbrennungsgefahr besteht.

## Patentansprüche

1. Isolierung zum Anlegen an Aussenflächen von Bauteilen, zusammengestellt aus miteinander verbindbaren Isolierelementen (1) mit einer Innenhaut (2), einer Aussenhaut (3), diese verbindenden Verbindungsflächen (4) und Isoliermaterial (8), wobei im an ein Bauteil angelegten Zustand die Innenhaut (2) dem Bauteil zugewandt und die Aussenhaut (3) von diesem abgewandt ist, sowie die Innenhaut (2) mindestens eine Lage von aus Draht hergestelltem textilem Flachmaterial umfasst, wobei die Aussenhaut (3) eine betriebsbeständige Schottschicht in der Form einer Metallfolie (9) umfasst und wobei aus Draht hergestelltes textiles Flachmaterial der Innenhaut (2) sich über die Verbindungsflächen (4) erstreckt und mit einer Schweissverbindung mit der Aussenhaut verbunden ist,**dadurch gekennzeichnet, dass** das Isoliermaterial (8) von der Innenhaut (2), der Aussenhaut (3) und den Verbindungsflächen (4) vollständig umschlossen ist.

2. Isolierung nach Anspruch 1, **dadurch gekennzeichnet, dass** das mindestens eine aus Draht hergestellte Flachmaterial der Innenhaut (2) und der Verbindungsflächen (4) ein Mikrofilter-Flachmaterial mit einer kleinen Filterfeinheit ist, wobei die Drähte dieses Mikrofilter-Flachmaterials vorzugsweise Durchmesser im Bereich von 0.02mm bis 0.4, insbesondere von 0.04mm bis 0.13mm haben und gegebenenfalls die Maschenzahl in einer Richtung im Bereich von 80 bis 1000 Maschen/cm oder die Maschenzahl pro Fläche vorzugsweise bei im wesentlichen 600x125 Maschen/cm² liegt.

3. Isolierung nach Anspruch 1 oder 2, **dadurch gekennzeichnet, dass** die Innenhaut (2) und auch die Verbindungsflächen (4) ein zweites aus Draht hergestelltes Flachmaterial umfassen, wobei dieses grobporig ausgebildet ist und dabei Drähte mit einem Drahtdurchmesser von mindestens 0.1mm, gegebenenfalls mindestens 0.2mm, insbesondere aber von im Wesentlichen 0.25mm aufweist.

4. Isolierung nach einem der Ansprüche 1 bis 3, **dadurch gekennzeichnet, dass** die Aussenhaut (3) auf der dem Isoliermaterial (8) abgewandten Seite der Aussenhaut (3) ein aus Draht hergestelltes Flachmaterial umfasst, wobei dieses grobporig ausgebildet ist und dabei gegebenenfalls weniger als 400, insbesondere im Wesentlichen 130 Maschen/cm² (mesh/ cm²), und/oder Drähte mit einem Drahtdurchmesser von mindestens 0.1 mm, gegebenenfalls mindestens 0.2mm, insbesondere aber von im Wesentlichen 0.25mm aufweist.

5. Isolierung nach einem der Ansprüche 1 bis 4, **dadurch gekennzeichnet, dass** mindestens eines der aus Draht hergestellten Flachmaterialien der Verbindungsflächen (4) mittels Schweissen mit der Metallfolie verbunden ist.

6. Isolierung nach einem der Ansprüche 1 bis 5, **dadurch gekennzeichnet, dass** bei den Verbindungsflächen (4) zwei aus Draht hergestellte Flachmateriallagen eine von der Innenhaut (2) und eine von der Aussenhaut (3) aneinander anliegen und mittels Schweissen miteinander verbunden sind.

7. Isolierung nach einem der Ansprüche 1 bis 6, **dadurch gekennzeichnet, dass** das Isoliermaterial (8) von einem Glasfaserstoff (11) hüllenförmig umgeben ist.

8. Isolierung nach einem der Ansprüche 1 bis 7, **dadurch gekennzeichnet, dass** das Isoliermaterial (8) aus langfasrigen Glas- oder Keramikfasern, vorzugsweise aber aus Silikatfasern besteht und gegebenenfalls schüttgutförmig eingefüllt, insbesondere aber in der Form von Fasermatten-Zuschnitten eingesetzt ist, wobei die Fasermatte vorzugsweise eine Dicke im Bereich von 5mm bis 50mm, insbesondere von im wesentlichen 25mm hat und die Länge der Fasern insbesondere grösser als 2cm, vorzugsweise im wesentlichen 5cm ist.

9. Isolierung nach einem der Ansprüche 1 bis 7, **dadurch gekennzeichnet, dass** mindestens ein Isolierelement (1) mindestens einen Durchlüftungskanal (16) umfasst, welcher sich als Verbindung von einem Bereich bei einer Innenhaut (2) zu einem Bereich bei einer Aussenhaut (3) erstreckt.

10. Verfahren zum Herstellen eines Isolierelementes (1) nach Anspruch 1, **dadurch gekennzeichnet, dass** zumindest ein aus Draht hergestelltes Flachmaterial einer Schicht der Innenhaut (2) mit zumindest einem Tiefziehschritt in die gewünschte Form der Innenhaut (2) und der Verbindungsflächen (4) gebracht wird.

11. Verfahren zum Herstellen eines Isolierelementes (1) nach Anspruch 1, **dadurch gekennzeichnet, dass** vor dem vollständigen Verschliessen der von der Innenhaut (2), der Aussenhaut (3) und den Verbindungsflächen (4) gebildeten Hülle durch mindestens eine Einfüllöffnung Isoliermaterial in der Form von pneumatisch förderbaren Fasern in die Hülle eingebracht wird und die Hülle anschliessend vollständig verschlossen wird.

## Claims

1. Insulation for applying it to outer surfaces of components, being composed of insulating elements (1) connectable to one another, which have an inner skin (2), an outer skin (3), connection surfaces (4) interconnecting them and insulating material (8), wherein in the condition of being applied to a component, the inner skin (2) faces the component, while the outer skin (3) is opposed to it, the inner skin (2) comprising at least one layer of flat textile material produced of wire, wherein the outer skin (3) comprises an operation resistant bulkhead layer in the form of a metal foil (9), and wherein the flat textile material produced of wire of the inner skin (2) extends over said connection surfaces (4) and is connected to the outer skin by a welding connection, **characterised in that** said insulating material (8) is completely surrounded by said inner skin (2), said outer skin (3) and said connection surfaces (4).

2. Insulation according to claim 1, **characterised in that** the at least one flat textile material produced of wire of the inner skin (2) and of the connection surfaces (4) is a micro-filter flat material of a small filter fineness, wherein the wires of this micro-filter flat material have preferably a diameter in the range of 0.02mm to 0.4, particularly from 0.04mm to 0.13, the number of meshes in one direction being optionally in the range of 80 to 1000 meshes/cm, or the number of meshes per area being preferably substantially 600x125 meshes/cm².

3. Insulation according to claim 1 or 2, **characterised in that** the inner skin (2) as well as the connection surfaces (4) comprise a second flat material produced of wire being coarsely porous comprising wires of a wire diameter of at least 0.1 mm, optionally at least 0.2mm, however in particular of substantially 0.25mm.

4. Insulation according to any of claims 1 to 3, **characterised in that** the outer skin (3) comprises a flat material produced of wire at the side of the outer skin (3) which is opposed to the insulating material (8), the same being coarsely porous comprising optionally less than 400, particularly substantially 130 mesh/cm² (mesh/cm²), and/or wires having a wire diameter of at least 0.1mm, optionally at least 0.2mm, however in particular of substantially 0.25mm.

5. Insulation according to any of claims 1 to 4, **characterised in that** at least one of the flat materials produced of wire of the connection surfaces (4) is connected to the metal foil by welding.

6. Insulation according to any of claims 1 to 5, **characterised in that** two layers of flat material produced of wire, one of the inner skin (2) and one of the outer skin (3), engage each other at the connection surfaces (4) and are interconnected by welding.

7. Insulation according to any of claims 1 to 6, **characterised in that** said insulating material (8) is surrounded in form of an envelope by a glass fibre fabric (11).

8. Insulation according to any of claims 1 to 7, **characterised in that** said insulating material (8) consists of long fibre glass or ceramic fibres, but preferably of silicate fibres, and is optionally filled in the form of bulk material, but in particular is used in the form of fibre mat blanks, wherein the fibre mat preferably has a thickness in the range of 5mm to 50mm, particularly of substantially 25mm, the length of the fibres being in particular larger than 2cm, preferably substantially 5cm.

9. Insulation according to any of claims 1 to 7, **characterised in that** at least one insulating element (1) comprises at least one aeration channel (16), which extends as a connection from one area at the inner skin (2) to an area at the outer skin (3).

10. A method for the production of an insulating element (1) according to claim 1, **characterised in that** at least one flat material produced of wire of one layer of the inner skin (2) is brought by at least one deep-drawing step into the desired shape of the inner skin (2) and of the connection surfaces (4).

11. A method for the production of an insulating element (1) according to claim 1, **characterised in that** before completely closing the envelope, which is formed by the inner skin (2), the outer skin (3) and connection surfaces, insulating material in the form of pneumatically conveyable fibres is brought into the envelope, and the envelope is subsequently completely closed.

## Revendications

1. Isolation pour l'appliquer aux surfaces extérieures des composants, composée par des éléments isolants (1), qui peuvent être reliés l'un à l'autre, et comprennent une pellicule intérieure (2) une pellicule extérieure (3), des surfaces de connexion (4), qui les relient, et une matière isolante (8), dans laquelle, en état d'application au composant, la pellicule intérieure (2) est tournée vers le composant, et la pellicule extérieure (3) est détournée de ceci, et la pellicule intérieure (2) comprend au moins une couche de matériau plat textile produit de fil métallique, dans laquelle la pellicule extérieure (3) comprend une couche de cloisonnement résistant en service en forme d'une feuille métallique (9), et dans laquelle le matériau plat textile produit de fil métallique de la pellicule intérieure (2) s'étend sur les surfaces de connexion (4) et est relié à la pellicule extérieure par un joint soudé, **caractérisée en ce, que** la matière isolante (8) est complètement enveloppée par la pellicule intérieure (2), la pellicule extérieure (3) et par les surfaces de connexion (4).

2. Isolation selon la revendication 1, **caractérisée en ce, que** l'au moins un matériau plat produit de fil métallique de la pellicule intérieure (2) et des surfaces de connexion (4) est matériau plat de micro-filtre d'une petite finesse, les fils métalliques des ce matériau plat de micro-filtre ayant de préférence des diamètres dans la domaine de 0,02mm à 0,4, particulièrement de 0,04mm à 0,13 mm, dans laquelle le numéro de maille dans une direction est dans la domaine de 80 à 1000 mailles/cm ou le numéro de maille par surface est de préférence sensiblement environ 600x125 mailles/cm².

3. Isolation selon la revendication 1 ou 2, **caractérisée en ce, que** la pellicule intérieure (2) et aussi les surfaces de connexion (4) comprennent un deuxième matériau plat produit de fil métallique, ceci étant formé à grands pores et comprenant des fils métalliques d'un diamètre de fil métallique d'au moins 0,1mm, le cas échéant d'au moins 0,2mm, mais particulièrement sensiblement de 0,25mm.

4. Isolation selon une quelconque des revendications 1 à 3, **caractérisée en ce, que** la pellicule extérieure (3) comprend un matériau plat produit de fil métallique au côté détourné de la matière isolante (8), ceci étant formé à grands pores et comprenant, le cas échéant, moins de 400, particulièrement 130 mailles/cm² (mesh/cm²), et/ou des fils métalliques d'un diamètre de fil métallique d'au moins 0,1 mm, le cas échéant d'au moins 0,2mm, mais particulièrement sensiblement de 0,25mm.

5. Isolation selon une quelconque des revendications 1 à 4, **caractérisée en ce, qu'**au moins un des matériaux plats produits de fil métallique des surfaces de connexion (4) est relié à la feuille métallique par soudage.

6. Isolation selon une quelconque des revendications 1 à 5, **caractérisée en ce, qu'**au surfaces de connexion (4), deux couches de matériau plat produit de fil métallique, une de la pellicule intérieure (2) et une de la pellicule extérieure (3), contactent l'une à l'autre et sont reliées l'une à l'autre par soudage.

7. Isolation selon une quelconque des revendications 1 à 6, **caractérisée en ce, que** la matière isolante (8) est entourée en forme d'enveloppe par une étoffe de fibres de verre (11).

8. Isolation selon une quelconque des revendications 1 à 7, **caractérisée en ce, que** la matière isolante (8) consiste de fibres allongées de verre ou de céramique, mais de préférence de fibres de silicate, et le cas échéant est remplie en forme d'un produit en vrac, mais en particulier est utilisée en forme des pièces découpées de natte de fibres, la natte de fibres ayant de préférence une épaisseur dans la domaine de 5mm à 50mm, en particulier sensiblement de 25mm, et la longueur des fibre, en particulier, étant plus grande que 2cm, de préférence sensiblement 5cm.

9. Isolation selon une quelconque des revendications 1 à 7, **caractérisée en ce, qu'**au moins un élément isolant (1) comprend au moins un canal d'aération (16), qui s'étend comme une connexion d'une zone chez la pellicule intérieure (2) vers une zone chez la pellicule extérieure (3).

10. Procédé pour fabriquer un élément isolant (1) selon la revendication 1, **caractérisé en ce, qu'**au moins un matériau plat produit de fil métallique d'une couche de la pellicule intérieure (2) est amené dans la forme désirée de la pellicule intérieure (2) et des surfaces de connexion (4) par au moins une étape d'emboutissage.

11. Procédé pour fabriquer un élément isolant (1) selon la revendication 1, **caractérisé en ce, qu'**avant de la fermeture complète de l'enveloppe formée par la pellicule intérieure (2), de la pellicule extérieure (3) et les surfaces de connexion (4), de la matière isolante en forme des fibres capable d'être convoyée d'une façon pneumatique est introduit dans l'enveloppe à travers d'une ouverture de remplissage, et en suite l'enveloppe est fermée complètement.
